# EUROPÄISCHE PATENTSCHRIFT

(11) **EP 2 094 757 B1**
(45) Veröffentlichungstag und Bekanntmachung des Hinweises auf die Patenterteilung: **13.01.2021**
(21) Anmeldenummer: 07822191.8
(22) Anmeldetag: 05.11.2007
(51) Int. Cl.: C08G 101/00, C08G 18/50, C08G 18/76, C08G 18/18, C08G 65/26, C08G 18/20, C08G 18/48

(54) **VERFAHREN ZUR HERSTELLUNG VON POLYURETHAN-HARTSCHAUMSTOFFEN**
METHOD FOR THE PRODUCTION OF RIGID POLYURETHANE FOAMS
PROCÉDÉ DE PRODUCTION DE MOUSSES DURES DE POLYURÉTHANE

(30) Priorität: 14.11.2006 EP 06124014
(43) Veröffentlichungstag der Anmeldung: 02.09.2009
(73) Patentinhaber: BASF SE, 67056 Ludwigshafen am Rhein (DE)
(72) Erfinder: DINSCH, Stefan, 01993 Schipkau (DE); WINKLER, Jürgen, 01987 Schwarzheide (DE); HÖPPNER, Gerd, 01987 Schwarzheide (DE); SEIFERT, Holger, 49163 Bohmte (DE)
(74) Vertreter: BASF IP Association
(86) Internationale Anmeldenummer: PCT/EP2007/061862
(87) Internationale Veröffentlichungsnummer: WO 2008/058863

(56) Entgegenhaltungen:
- EP-A- 0 747 411
- DE-A1- 4 232 970
- US-A- 5 786 405

## Beschreibung

Gegenstand der Erfindung ist ein Verfahren zur Herstellung von Polyurethan-Hartschaumstoffen durch Umsetzung von Polyisocyanaten mit Verbindungen mit mindestens zwei mit Isocyanatgruppen reaktiven Wasserstoffatomen.

Polyurethan-Hartschaumstoffe sind seit langem bekannt und werden vorwiegend zur Wärme- und Kälteisolation, z. B. in Kühlgeräten, in Warmwasserspeichern, in Fernwärmerohren oder im Bauwesen, beispielsweise in Sandwichelementen, eingesetzt.

Eine zusammenfassende Übersicht über die Herstellung und Anwendung Polyurethan-Hartschaumstoffen findet sich beispielsweise im Kunststoff-Handbuch, Band 7, Polyurethane 1. Auflage 1966, herausgegeben von Dr. R. Vieweg und Dr. A. Höchtlen, 2. Auflage 1983, herausgegeben von Dr. Günter Oertel, und 3. Auflage 1993, herausgegeben von Dr. Günter Oertel, Carl Hanser Verlag, München, Wien.

Bei der Anwendung der Polyurethan-Hartschaumstoffe kommt es darauf an, für den jeweiligen Verwendungszweck optimale Eigenschaften zu erreichen.

Bei der Variation der Verarbeitungs- und Gebrauchseigenschaften der Polyurethan-Hartschaumstoffe werden insbesondere die Verbindungen mit mindestens zwei mit Isocyanatgruppen reaktiven Wasserstoffatomen angepasst.

Insbesondere für den Einsatz in Kältegeräten werden als Verbindungen mit mindestens zwei mit Isocyanatgruppen reaktiven Wasserstoffatomen häufig Polyetheralkohole eingesetzt, die durch Anlagerung von Alkylenoxiden an aromatische Amine erhalten werden. Unter den aromatischen Aminen haben die Isomeren des Toluylendiamins (TDA) eine besondere Bedeutung. Derartige Produkte bewirken optimale Fließeigenschaften bei der Herstellung der Schaumstoffe sowie eine geringe Wärmeleitfähigkeit der Schaumstoffe.

Polyetheralkohole auf der Basis von TDA sowie die Herstellung derartiger Produkte ist ebenfalls bekannt. So beschreibt EP 747 411 Polyetheralkohole auf Basis von ortho-TDA, auch als vicinales TDA bezeichnet. Bei der Herstellung dieser Polyetheralkohole wird in einem ersten Verfahrensschritt ohne Einsatz eines Katalysators reines Ethylenoxid und in einem zweiten Verfahrensschritt unter Einsatz eines basischen Katalysators reines Propylenoxid angelagert.

Die so hergestellten Polyetheralkohole zeichnen sich durch eine relativ geringe Funktionalität aus und bewirken eine späte Aushärtung des Polyurethansystems. Damit können auch komplizierte Hohlräume, wie sie insbesondere bei Kühlmöbeln vorkommen, vollständig ausgefüllt werden. Der hohe Gehalt an Ethylenoxid im Polyetheralkohol führt zu einer geringeren Verträglichkeit mit den Polyisocyanaten und damit zu einer schlechteren Härtung und einer größeren Entformdicke der Schaumstoffe.

DE 4232970 A1 offenbart ein Verfahren zur Herstellung von Polyetheralkoholen durch basisch katalysierte Anlagerung von Alkylenoxiden an Toluylendiamin, wobei das Toluylendiamin einen Gehalt an 2,3- und 3,4-Toluylendiamin von ≥50 Gew.-%, bezogen auf das gesamte Toluylendiamin, aufweist und der Anteil von Ethylenoxid an der Gesamtalkylenoxidmenge 5 bis 12 Gew.-% beträgt. Die erhaltenen Polyetheralkohole werden ebenfalls beschrieben.

US 5,786,405 betrifft ein Verfahren zur Herstellung eines Amin-initiierten Polyetherpolyols, wobei ein Amin in Gegenwart eines Alkalimetallhydroxid-Katalysators epoxidiert wird und, nachdem der erwünschte Epoxidierungsgrad vervollständigt ist, eine Hydroxycarbonsäure in einer Menge zu der epoxidierten Mischung gegeben wird, die ausreichend ist, um verbleibendes Alkalimetallhydroxid zu neutralisieren.

Auch in WO 05/044889 wird ein Polyurethan-Hartschaumstoff beschrieben, der unter Verwendung eines TDA-basierten Polyetheralkohols hergestellt wurde. Dabei wurde in einem ersten Reaktionsschritt ein Gemisch aus Ethylenoxid uns Propylenoxid und im zweiten Schritt reines Propylenoxid angelagert werden. Dabei beträgt der Anteil an Ethylenoxid, bezogen auf den Poyetheralkohol, 2 bis 25 Gew.-%.

Wesentlich für zahlreiche Anwendungen auf dem Hartschaumgebiet, besonders bei der Dämmung von Kühlgeräten, ist das Aushärteverhalten des angewendeten Systems, welches die Taktzeiten bei der Geräteherstellung stark mitbestimmt.

Aufgabe der Erfindung ist ein Verfahren zur Herstellung von Polyurethan- Hartschaumstoffen zu entwickeln, das sich durch eine gute Wärmeleitfähigkeit, eine hohe Löslichkeit der Treibmittel im System sowie optimale Fließ- und Aushärtezeiten auszeichnet. Außerdem sollte die Verträglichkeit der eingesetzten Polyole untereinander gewährleistet sein.

Die Aufgabe konnte überraschenderweise durch den Einsatz eines Polyetheralkohols gelöst werden, der herstellbar ist durch Umsetzung von aromatischen Aminen mit Ethylenoxid und Propylenoxid, wobei in einer ersten Verfahrensstufe erst Propylenoxyd und anschließend Ethylenoxyd, und in der zweiten Verfahrensstufe Propylenoxid angelagert wird.

Gegenstand der Erfindung ist demzufolge ein

Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Anwesenheit von
c) Treibmitteln,
wobei die Verbindungen mit mindestens zwei mit Isocyanatgruppen reaktiven Wasserstoffatomen mindestens einen Polyetheralkohol bi) enthalten, der herstellbar ist durch Umsetzung von Toluylendiamin als aromatisches Amin mit Ethylenoxid und Propylenoxid, wobei in einer ersten Verfahrensstufe zunächst Propylenoxid und danach Ethylenoxid und in einer zweiten Verfahrensstufe die Restmenge an Propylenoxid angelagert wird, und
wobei die erste Verfahrensstufe der Herstellung der Polyetheralkohole bi) ohne Anwesenheit eines Katalysators durchgeführt wird, und die zweite Verfahrensstufe der Herstellung der Polyetheralkohole bi) in Anwesenheit eines basischen Katalysators durchgeführt wird, und
wobei in der ersten Verfahrensstufe 2,5 bis 4 Mol Alkylenoxid pro Mol aromatisches Amin eingesetzt werden, und
wobei in der ersten Verfahrensstufe 1,5 bis 2 Mol Ethylenoxid und 1 bis 2 Mol Propylenoxid pro Mol aromatisches Amin eingesetzt werden,
dadurch gekennzeichnet, dass der Gesamtgehalt an Ethylenoxid im Polyetheralkohol 4 bis 20 Gew.-%, bezogen auf das Gewicht des Polyetheralkohols, ist.

Gegenstand der Erfindung sind weiterhin die Polyetheralkohole bi) sowie ein Verfahren zu ihrer Herstellung durch Anlagerung von Ethylenoxid und Propylenoxid an Toluylendiamin als aromatisches Amin, dadurch gekennzeichnet, dass in einer ersten Verfahrensstufe zunächst Propylenoxid und danach Ethylenoxid und in einer zweiten Verfahrensstufe unter Verwendung eines basischen Katalysators die Restmenge an Propylenoxid angelagert wird,
und
wobei die erste Verfahrensstufe der Herstellung der Polyetheralkohole bi) ohne Anwesenheit eines Katalysators durchgeführt wird, und
wobei in der ersten Verfahrensstufe 2,5 bis 4 Mol Alkylenoxid pro Mol aromatisches Amin eingesetzt werden, und
wobei in der ersten Verfahrensstufe 1,5 bis 2 Mol Ethylenoxid und 1 bis 2 Mol Propylenoxid pro Mol aromatisches Amin eingesetzt werden,
dadurch gekennzeichnet, dass der Gesamtgehalt an Ethylenoxid im Polyetheralkohol 4 bis 20 Gew.-%, bezogen auf das Gewicht des Polyetheralkohols, ist.

Besonders vorteilhaft ist es, die Aminogruppen des Toluylendiamins zuerst mit Propylenoxyd umzusetzen. Dabei entstehen sekundäre Hydroxylgruppen. Die weitere Anlagerung des nun folgenden Ethylenoxyds bevorzugt die verbliebenen Aminogruppen und bindet diese vorrangig ab. Somit erfolgt eine weitere Minimierung freier Aminogruppen und somit eine weitere Absenkung der Eigenreaktivität des Polyetheralkohols. Nach der Dosierung des Propylenoxids wird, wie beschrieben, vorzugsweise reines Ethylenoxid dosiert. Möglich ist auch die Dosierung von Gemischen aus Ethylenoxid und Propylenoxid, wobei der Gehalt an Propylenoxid an der Mischung 20 Gew.-%, bezogen auf die Mischung, nicht überschreiten sollte.

Die Hydroxylzahl 420 des Polyetheralkohols bi) liegt vorzugsweise im Bereich zwischen 140 und 420 mgKOH/g, insbesondere zwischen 140 und 470 mgKOH/g Dabei kann in einer besonders bevorzugten Ausführungsform der Erfindung, je nach bevorzugtem Einsatzgebiet der erfindungsgemäß hergestellten Polyetheralkohole, die Hydroxylzahl im Bereich zwischen 140 bis 180 mgKOH/g oder im Bereich zwischen 370 bis 420 mgKOH/g liegen.

Als aromatische Amine zur Herstellung der Polyetheralkohole bi) wird TDA eingesetzt, wobei das TDA besonders bevorzugt einen Anteil von vicinalem TDA von mindestens 95 Gew.-% aufweist.

Erfindungsgemäß wird die erste Verfahrensstufe der Herstellung der Polyetheralkohole bi) ohne Anwesenheit eines Katalysators durchgeführt.

Weiterhin wird die zweite Verfahrensstufe der Herstellung der Polyetheralkohole bi) in Anwesenheit eines basischen Katalysators durchgeführt. Als basische Katalysatoren werden vorzugsweise alkalische Verbindungen und/oder Amine, besonders bevorzugt Alkali- und/oder Erdalkalimetalloxide und -hydroxide und insbesondere Kaliumhydroxid eingesetzt.

Erfindungsgemäß werden in der ersten Verfahrensstufe 2,5 bis 4 Mol Alkylenoxid pro Mol aromatisches Amin eingesetzt. Besonders bevorzugt werden in der ersten Verfahrensstufe 1,5 bis 2 Mol Ethylenoxyd und 1 bis 2 Mol Propylenoxyd pro Mol aromatisches Amin eingesetzt.

Der Ethylenoxydgehalt im Polyetheralkohol liegt im Bereich von 4 bis 20 Gew.-%, bezogen auf das Gewicht des Polyetheralkohols.

In der zweiten Verfahrensstufe kann an Stelle von reinem Propylenoxid auch ein Gemisch aus Propylenoxid und >0 bis 20 Gew.-%, vorzugsweise >0 bis 5 Gew.-%, jeweils bezogen auf das Gewicht der Mischung, an Ethylenoxid eingesetzt werden.

In einer bevorzugten Ausführungsform der Herstellung der Polyetheralkohole bi) wird die zweite Verfahrensstufe in Anwesenheit von Wasser oder mindestens einer weiteren Verbindung mit mindestens zwei aktiven Wasserstoffatomen durchgeführt. Das Wasser kann dabei als Substanz oder als Lösungsmittels des alkalischen Katalysators zugesetzt werden.

Die Herstellung der Polyetheralkohole bi) erfolgt nach üblichem und beispielsweise in EP 747 411 beschriebenen Verfahren. Dabei wird die Anlagerung der Alkylenoxide bevorzugt bei einer Temperatur zwischen 100 und 135 °C und einem Druck zwischen 0,1 bis 8 bar durchgeführt. An die Dosierung der Alkylenoxide schließt sich üblicherweise eine Nachreaktionsphase zur vollständigen Umsetzung der Alkylenoxide an. Der so erhaltene Rohpolyetheralkohol wird durch Destillation, vorzugsweise unter Vakuum, von nicht umgesetztem Alkylenoxid und leicht flüchtigen Verbindungen befreit, entwässert sowie durch Säureneutralisation und Abtrennung der entstandenen Salze aufgearbeitet.

Im Falle einer Katalyse mit tertiären Aminen wird das Rohprodukt mit Stickstoff- und/oder Vakuumgestrippt und anschließend gegebenenfalls filtriert.

Die Herstellung der Polyurethan-Hartschaumstoffe erfolgt, wie oben ausgeführt, durch Umsetzung der Polyole mit Polyisocyanaten, wobei die Umsetzung üblicherweise in Anwesenheit von Katalysatoren, Treibmitteln sowie Hilfs- und/oder Zusatzstoffen durchgeführt wird.

Dabei kann der Polyetheralkohol bi) allein, vorzugsweise jedoch in Anwesenheit weiterer Verbindungen mit mindestens zwei mit Isocyanatgruppen reaktiven Wasserstoffatomen eingesetzt werden.

Zu den übrigen für das erfindungsgemäße Verfahren eingesetzten Einsatzstoffen ist im einzelnen folgendes zu sagen:

Als organische Polyisocyanate a) kommen aromatische mehrwertige Isocyanate in Betracht.

Im einzelnen seien beispielhaft genannt: 2,4- und 2,6-Toluylen-diisocyanat (TDI) und die entsprechenden Isomerengemische. Die organischen Di- und Polyisocyanate können einzeln oder in Form von Mischungen eingesetzt werden.

Als Verbindungen mit mindestens zwei gegenüber Isocyanat reaktiven Wasserstoffatomen b), die gemeinsam mit den erfindungsgemäß eingesetzten Polyetheralkoholen bi) verwendet werden können, kommen insbesondere Polyetheralkohole und/oder Polyesteralkohole mit OH-Zahlen im Bereich von 100 bis 1200 mgKOH/g zum Einsatz.

Die gemeinsam mit den erfindungsgemäß eingesetzten Polyetheralkoholen bi) verwendeten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den erfindungsgemäß eingesetzten Polyetheralkoholen bi) verwendeten Polyetheralkohole haben zumeist eine Funktionalität zwischen 2 und 8, insbesondere 3 bis 8.

Insbesondere kommen Polyetherpolyole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diaminodiphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 100 mgKOH/g bis 1200 mgKOH/g und insbesondere 120 mgKOH/g bis 570 mgKOH/g.

Durch den Einsatz von difunktionellen Polyolen, beispielsweise Polyethylenglykolen und/oder Polypropylenglykolen, mit einem Molgewicht im Bereich zwischen 500 bis 1500 in der Polyolkomponente kann die Viskosität der Polyolkomponente angepasst werden.

Zu den Verbindungen mit mindestens zwei gegenüber Isocyanat reaktiven Wasserstoffatomen b) gehören auch die gegebenenfalls mitverwendeten Kettenverlängerer und Vernetzer. Die PUR-Hartschaumstoffe können ohne oder unter Mitverwendung von Kettenverlängerungs- und/oder Vernetzungsmitteln hergestellt werden. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente b), eingesetzt.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

In einer besonders bevorzugten Ausführungsform des erfindungsgemäßen Verfahrens enthält die Komponente b) einen Polyetheralkohol bii), der herstellbar ist durch Umsetzung von H-funktionellen Zuckern mit Alkylenoxiden.

Die zur Herstellung des Polyetheralkohols bii) eingesetzten Zucker sind vorzugsweise Saccharose und/oder Sorbit. Die Polyetheralkohole bii) haben vorzugsweise eine Hydroxylzahl im Bereich zwischen 350 und 800 mgKOH/g.

Als Katalysatoren werden insbesondere Verbindungen eingesetzt, welche die Reaktion der Isocyanatgruppen mit den mit Isocyanatgruppen reaktiven Gruppen stark beschleunigen.

Solche Katalysatoren sind stark basische Amine, wie z. B. sekundäre aliphatische Amine, Imidazole, Amidine, sowie Alkanolamine oder organische Metallverbindungen, insbesondere organische Zinnverbindungen.

Wenn in den Polyurethan-Hartschaum auch Isocyanuratgruppen eingebaut werden sollen, werden dafür spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Treibmittel c) kann vorzugsweise Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die physikalischen Treibmittel werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und 1,1,1,2,3,3,3-Heptafluorpropan, sowie Perfluoralkane, wie, C₃F₈, C₄F₁₀, C₅F₁₂, C₆F₁₄, und C₇F₁₇. beosnders bevorzugt sind Pentane, insbesondere Cyclopentan. Die genannten physikalischen Treibmittel können allein oder in beliebigen Kombinationen untereinander eingesetzt werden.

Das erfindungsgemäße Verfahren kann, falls erforderlich, in Anwesenheit von Flammschutzmitteln sowie üblichen Hilfs- und/oder Zusatzstoffen Hilfs- und/oder Zusatzstoffen durchgeführt werden.

Als Flammschutzmittel können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen.

Typischer Vertreter dieser Gruppe von Flammschutzmitteln sind Triethylphosphat, Diphenylkresylphosphat, Tris-(Chlorpropyl)-phosphat sowie Diethylethanphosphonat.

Daneben können auch Brom enthaltende Flammschutzmittel zum Einsatz kommen. Als Brom enthaltende Flammschutzmittel werden vorzugsweise gegenüber der Isocyanatgruppe reaktive Gruppen aufweisende Verbindungen eingesetzt. Derartige Verbindungen sind Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Polyurethan-Hartschaumstoffe werden die Polyisocyanate a), und die Verbindungen mit mindestens zwei mit Isocyanatgruppen reaktiven Wasserstoffatomen b) in solchen Mengen zur Umsetzung gebracht, daß der Isocyanatindex in einem Bereich zwischen 100 und 220, vorzugsweise zwischen 115 und 195, liegt. Die Polyurethan-Hartschaumstoffe können diskontinuierlich oder kontinuierlich mit Hilfe bekannter Mischvorrichtungen hergestellt werden.

Bei der Herstellung von Polyisocyanuratschäumen kann auch mit einem höheren Index, vorzugsweise bis 350, gearbeitet werden.

Üblicherweise werden die erfindungsgemäßen PUR-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen b), mit den Flammschutzmitteln, den Katalysatoren, den Treibmitteln, sowie den weiteren Hilfs- und/oder Zusatzstoffen zu einer sogenannten Polyolkomponente vermischt und diese mit den Polyisocyanaten oder Mischungen aus den Polyisocyanaten und gegebenenfalls Treibmitteln, auch als Isocyanatkomponente bezeichnet, zur Umsetzung gebracht.

Die Ausgangskomponenten werden zumeist bei einer Temperatur von 15 bis 35°C, vorzugsweise von 20 bis 30°C gemischt. Das Reaktionsgemisch kann mit Hoch- oder Niederdruckdosiermaschinen in geschlossene Stützwerkzeuge gegossen werden. Nach dieser Technologie werden z. B. diskontinuierlich Sandwichelemente gefertigt.

Die nach dem erfindungsgemäßen Verfahren hergestellten Polyetheralkohole können, wie beschrieben, mit Polyisocyanaten zu Polyurethan-Hartschaumstoffen umgesetzt werden. Sie sind sehr gut mit den übrigen Bestendteilen der Polyolkomponente mischbar und gut mit den vorzugsweise zur Herstellung von PU-Hartschaumstoffen vorzugsweise als Treibmittel eingesetzten Kohlenwasserstoffen verträglich. Die Schäume weisen eine niedrige Wärmeleitfähigkeit, eine gute Fließfähigkeit, eine gute Aushärtung und eine gute Entformbarkeit auf.

Die Erfindung soll an den nachfolgenden Beispielen näher erläutert werden.

### Beispiel 1 (erfindungsgemäß):

In einen 250 I - Druckautoklaven mit Etagenrührwerk (250 U/min.), Reaktorheizung und -kühlung, Dosiereinrichtungen für feste und flüssige Substanzen und Alkylenoxide sowie Einrichtungen zur Stickstoffinertisierung und einem Vakuumsystem wurden 43,6 kg vicinales Toluylendiamin vorgelegt und auf 90°C erwärmt. Anschließend wurden 22,0 kg Propylenoxyd zudosiert und bei 130°C zur Reaktion gebracht. 10 Minuten nach Dosierende wurde der Reaktor mit 2,5 bar Stickstoff beaufschlagt, und es wurde bei 130°C 28,7 kg Ethylenoxyd dosiert. Nach einer Nachreaktion von 3 Stunden wurde dem Reaktionsgemisch 0,705 kg 48%-ige Kalilauge zugegeben und vermischt. Anschließend wurden 100,2 kg Propylenoxid dosiert, wobei ein Druck von 6,5 bar nicht überschritten wurde. Die Reaktionstemperatur stieg während der Umsetzung bis auf 135°C und wurde für die gesamte Reaktionszeit beibehalten. Es folgt eine Nachreaktion von 3 Stunden bei 135°C.

Das erhaltene Rohpolyetherol wurde mit Wasser hydrolisiert, mit Phosphorsäure neutralisiert, filtriert und vakuumgestrippt.

Das Endprodukt wies nachstehende Werte auf:

| | | |
|---|---|---|
| Hydroxylzahl: | 391 | mgKOH/g |
| Aminzahl | 105 | mgKOH/g |
| Wassergehalt | 0,044 | Gew.-% |
| Viskosität 25°C | 11144 | mPa s |

### Beispiel 2 (erfindungsgemäß):

In einen 250 I - Druckautoklaven mit Etagenrührwerk (250 U/min.), Reaktorheizung und -kühlung, Dosiereinrichtungen für feste und flüssige Substanzen und Alkylenoxide sowie Einrichtungen zur Stickstoffinertisierung und einem Vakuumsystem wurden 43,6 kg vicinales Toluylendiamin vorgelegt und auf 90°C erwärmt. Anschließend wurden 22,0 kg Propylenoxyd zudosiert und bei 110°C zur Reaktion gebracht. 10 Minuten nach Dosierende wurde der Reaktor mit 2,5 bar Stickstoff beaufschlagt, und es wurden bei 110°C 28,7 kg Ethylenoxyd dosiert. Nach einer Nachreaktion von 3 Stunden wurden dem Reaktionsgemisch 1,945 kg Dimethylethanolamin zugegeben und vermischt. Anschließend wurden 100,2 kg Propylenoxid dosiert, wobei ein Druck von 6,5 bar nicht überschritten wurde. Die Reaktionstemperatur stieg während der Umsetzung bis auf 112°C und wurde für die gesamte Reaktionszeit beibehalten. Es folgt eine Nachreaktion von 3 Stunden bei 120°C.

Das erhaltene Rohpolyetherol wurde vakuumgestrippt und filtriert. Das Endprodukt wies nachstehende Werte auf:

| | | |
|---|---|---|
| Hydroxylzahl: | 395 | mgKOH/g |
| Aminzahl | 111 | mgKOH/g |
| Wassergehalt | 0,032 | Gew.-% |
| Viskosität 25°C | 25620 | mPa s |

### Beispiel 3 (erfindungsgemäß):

In einen 250 I - Druckautoklaven mit Etagenrührwerk (250 U/min.), Reaktorheizung und -kühlung, Dosiereinrichtungen für feste und flüssige Substanzen und Alkylenoxide sowie Einrichtungen zur Stickstoffinertisierung und einem Vakuumsystem wurden 17,3 kg vicinales Toluylendiamin vorgelegt und auf 90°C erwärmt Anschließend wurden 8,75 kg Propylenoxyd zudosiert und bei 130°C zur Reaktion gebracht. 10 Minuten nach Dosierende wurde der Reaktor mit 2,5 bar Stickstoff beaufschlagt, und es folgten bei 130°C 11,4 kg Ethylenoxyd. Nach einer Nachreaktion von 3 Stunden wurden dem Reaktionsgemisch 0,80 kg 48%-ige Kalilauge zugegeben und vermischt. Anschließend wurden 160 kg Propylenoxid dosiert, wobei ein Druck von 6,5 bar nicht überschritten wurde. Die Reaktionstemperatur stieg während der Umsetzung bis auf 135°C und wurde für die gesamte Reaktionszeit beibehalten. Es folgte eine Nachreaktion von 3 Stunden bei 135°C.

Das erhaltene Rohpolyetherol wurde mit Wasser hydrolisiert, mit Phosphorsäure neutralisiert, filtriert und vakuumgestrippt.

Das Endprodukt wies nachstehende Werte auf:

| | | |
|---|---|---|
| Hydroxylzahl: | 161 | mgKOH/g |
| pH - Wert | 8,5 | |
| Wassergehalt | 0,07 | Gew.-% |
| Viskosität 25°C | 834 | mPa s |

### Beispiel 4

### Herstellung eines Polyurethan-Hartschaums

Es wurden folgende Komponenten zu einer Polyolkomponente vermischt:
58,75 TI. Saccharose/Glycerin gestarteter PO Polyetherol der OH-Zahl 450 mg KOH/g
10,00 TI. Polyetheralkohol aus Beispiel 2
25,00 TI. TDA gestarteter PO/EO/PO Polyetherol der OH-Zahl 160 mg KOH/g
2,50 TI. Tegostab B8462
0,50 TI. PMDETA
0,50 TI. DMCHA
0,40 TI. 1,3,5,Tris-(3-dimethylaminopropyl)hexahydro-s-triazin
2,35 TI. Wasser

Dieses Gemisch wurde mit Cyclo-/iso-Pentan und Lupranat® M20s im GewichtsVerhältnis 100 : 17 : 143 auf einer Hochdruckdosieranlage Puromat® 80/30 verschäumt.

Es wurden folgende Werte ermittelt:

| | |
|---|---|
| Startzeit : | 7s |
| Abbindezeit : | 39 s |
| Entformdicke (90mm Form) bei 15% Überfüllung: | |
| 4 min : | 93,1 mm |
| 5 min : | 92,0 mm |
| Wärmeleitfähigkeit: | 19,2 mW/mK bei 23°C Mitteltemperatur |
| Druckfestigkeit: | 0,13 N/mm² |

## Patentansprüche

1. Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Anwesenheit von
c) Treibmitteln,
wobei die Verbindungen mit mindestens zwei mit Isocyanatgruppen reaktiven Wasserstoffatomen mindestens einen Polyetheralkohol bi) enthalten, der herstellbar ist durch Umsetzung von Toluylendiamin als aromatisches Amin mit Ethylenoxid und Propylenoxid, wobei in einer ersten Verfahrensstufe zunächst Propylenoxid und danach Ethylenoxid und in einer zweiten Verfahrensstufe die Restmenge an Propylenoxid angelagert wird,
und
wobei die erste Verfahrensstufe der Herstellung der Polyetheralkohole bi) ohne Anwesenheit eines Katalysators durchgeführt wird, und die zweite Verfahrensstufe der Herstellung der Polyetheralkohole bi) in Anwesenheit eines basischen Katalysators durchgeführt wird, und
wobei in der ersten Verfahrensstufe 2,5 bis 4 Mol Alkylenoxid pro Mol aromatisches Amin eingesetzt werden, und
wobei in der ersten Verfahrensstufe 1,5 bis 2 Mol Ethylenoxid und 1 bis 2 Mol Propylenoxid pro Mol aromatisches Amin eingesetzt werden,
**dadurch gekennzeichnet, dass** der Gesamtgehalt an Ethylenoxid im Polyetheralkohol 4 bis 20 Gew.-%, bezogen auf das Gewicht des Polyetheralkohols, ist.

2. Verfahren nach Anspruch 1, **dadurch gekennzeichnet, dass** die zweite Verfahrensstufe in Anwesenheit von Wasser oder mindestens einer weiteren Verbindung mit mindestens zwei aktiven Wasserstoffatomen durchgeführt wird.

3. Verfahren nach Anspruch 1, **dadurch gekennzeichnet, dass** die Hydroxylzahl des Polyetheralkohols bi) im Bereich zwischen 140 und 420 mgKOH/g liegt.

4. Verfahren nach Anspruch 1, **dadurch gekennzeichnet, dass** als aromatisches Amin zur Herstellung des Polyetheralkohols bi) Toluylendiamin mit einem Anteil an vicinalem Toluylendiamin von mindestens 95 Gew.-% eingesetzt wird.

5. Verfahren nach Anspruch 1, **dadurch gekennzeichnet, dass** die Komponente b) einen Polyetheralkohol bii) enthält, der herstellbar ist durch Umsetzung von H-funktionellen Zuckern mit Alkylenoxiden.

6. Verfahren nach Anspruch 8, **dadurch gekennzeichnet, dass** die zur Herstellung des Polyetheralkohols bii) eingesetzten Zucker Saccharose und/oder Sorbit sind.

7. Verfahren zur Herstellung von Polyetheralkoholen durch Anlagerung von Ethylenoxid und Propylenoxid an Toluylendiamin als aromatisches Amin, **dadurch gekennzeichnet, dass** in einer ersten Verfahrensstufe zunächst Propylenoxid und danach Ethylenoxid und in einer zweiten Verfahrensstufe unter Verwendung eines basischen Katalysators die Restmenge an Propylenoxid angelagert wird,
und
wobei die erste Verfahrensstufe der Herstellung der Polyetheralkohole bi) ohne Anwesenheit eines Katalysators durchgeführt wird, und
wobei in der ersten Verfahrensstufe 2,5 bis 4 Mol Alkylenoxid pro Mol aromatisches Amin eingesetzt werden, und
wobei in der ersten Verfahrensstufe 1,5 bis 2 Mol Ethylenoxid und 1 bis 2 Mol Propylenoxid pro Mol aromatisches Amin eingesetzt werden,
**dadurch gekennzeichnet, dass** der Gesamtgehalt an Ethylenoxid im Polyetheralkohol 4 bis 20 Gew.-%, bezogen auf das Gewicht des Polyetheralkohols, ist.

8. Polyetheralkohole, herstellbar nach Anspruch 7.

## Claims

1. A process for producing rigid polyurethane foams by reacting
a) polyisocyanates with
b) compounds having at least two hydrogen atoms which are reactive toward isocyanate groups in the presence of
c) blowing agents,
where the compounds having at least two hydrogen atoms which are reactive toward isocyanate groups comprise at least one polyether alcohol bi) which can be prepared by reacting toluenediamine as aromatic amine with ethylene oxide and propylene oxide, with firstly propylene oxide and then ethylene oxide being added on in a first process step and the remaining amount of propylene oxide being added on in a second process step
and
the first process step of the preparation of the polyether alcohol bi) being carried out in the absence of a catalyst and the second process step of the preparation of the polyether alcohol bi) being carried in the presence of a basic catalyst and
from 2.5 to 4 mol of alkylene oxide being used per mol of aromatic amine in the first process step and
from 1.5 to 2 mol of ethylene oxide and from 1 to 2 mol of propylene oxide being used per mol of aromatic amine in the first process step,
wherein the total content of ethylene oxide in the polyether alcohol is from 4 to 20% by weight, based on the weight of the polyether alcohol.

2. The process according to claim 1, wherein the second process step is carried out in the presence of water or at least one further compound having at least two active hydrogen atoms.

3. The process according to claim 1, wherein the hydroxyl number of the polyether alcohol bi) is in the range from 140 to 420 mgKOH/g.

4. The process according to claim 1, wherein toluenediamine having a proportion of vicinal toluenediamine of at least 95% by weight is used as aromatic amine for preparing the polyether alcohol bi).

5. The process according to claim 1, wherein the component b) comprises a polyether alcohol bii) which can be prepared by reacting H-functional sugars with alkylene oxides.

6. The process according to claim 8, wherein the sugars used for preparing the polyether alcohol bii) are sucrose and/or sorbitol.

7. A process for preparing polyether alcohols by adding ethylene oxide and propylene oxide onto toluenediamine as aromatic amine, wherein firstly propylene oxide and then ethylene oxide are added on in a first process step and the remaining amount of propylene oxide is added on in a second process step using a basic catalyst
and
the first process step of the preparation of the polyether alcohol bi) is carried out in the absence of a catalyst and
from 2.5 to 4 mol of alkylene oxide are used per mol of aromatic amine in the first process step and
from 1.5 to 2 mol of ethylene oxide and from 1 to 2 mol of propylene oxide are used per mol of aromatic amine in the first process step,
wherein the total content of ethylene oxide in the polyether alcohol is from 4 to 20% by weight, based on the weight of the polyether alcohol.

8. A polyether alcohol which is able to be prepared according to claim 7.

## Revendications

1. Procédé pour la préparation de mousses dures de polyuréthane par transformation de
a) polyisocyanates avec
b) des composés comportant au moins deux atomes d'hydrogène réactifs envers des groupes isocyanate en présence de
c) propulseurs,
les composés comportant au moins deux atomes d'hydrogène réactifs envers des groupes isocyanate contenant au moins un polyétheralcool bi), qui peut être préparé par transformation d'une toluylènediamine en tant qu'amine aromatique avec de l'oxyde d'éthylène et de l'oxyde de propylène, dans lequel dans une première étape de procédé, tout d'abord de l'oxyde de propylène et ensuite de l'oxyde d'éthylène sont ajoutés et dans une deuxième étape de procédé la quantité résiduelle d'oxyde de propylène est ajoutée,
et
la première étape de procédé de la préparation des polyétheralcools bi) étant mise en œuvre sans la présence d'un catalyseur, et la deuxième étape de procédé de la préparation des polyétheralcools bi) étant mise en œuvre en présence d'un catalyseur basique, et
dans la première étape de procédé, 2,5 à 4 moles d'oxyde d'alkylène par mole d'amine aromatique étant utilisées, et
dans la première étape de procédé, 1,5 à 2 moles d'oxyde d'éthylène et 1 à 2 moles d'oxyde de propylène par mole d'amine aromatique étant utilisées,
**caractérisé en ce que** la teneur totale en oxyde d'éthylène dans le polyétheralcool est de 4 à 20 % en poids, par rapport au poids du polyétheralcool.

2. Procédé selon la revendication 1, **caractérisé en ce que** la deuxième étape de procédé est mise en œuvre en présence d'eau ou d'au moins un composé supplémentaire comportant au moins deux atomes d'hydrogène actifs.

3. Procédé selon la revendication 1, **caractérisé en ce que** l'indice d'hydroxyle du polyétheralcool bi) se situe dans la plage comprise entre 140 et 420 mg de KOH/g.

4. Procédé selon la revendication 1, **caractérisé en ce qu'**en tant qu'amine aromatique pour la préparation du polyétheralcool bi) une toluylènediamine dotée d'une proportion en toluylènediamine vicinale d'au moins 95 % en poids est utilisée.

5. Procédé selon la revendication 1, **caractérisé en ce que** le composant b) contient un polyétheralcool bii), qui peut être préparé par transformation de sucres fonctionnalisés par H avec des oxydes d'alkylène.

6. Procédé selon la revendication 8, **caractérisé en ce que** les sucres utilisés pour la préparation du polyétheralcool bii) sont le saccharose et/ou le sorbitol.

7. Procédé pour la préparation de polyétheralcools par addition d'oxyde d'éthylène et d'oxyde de propylène à une toluylènediamine en tant qu'amine aromatique, **caractérisé en ce que** dans une première étape de procédé, d'abord de l'oxyde de propylène et ensuite de l'oxyde d'éthylène sont ajoutés et dans une deuxième étape de procédé la quantité résiduelle d'oxyde de propylène est ajoutée avec utilisation d'un catalyseur basique,
et
la première étape de procédé de la préparation des polyétheralcools bi) étant mise en œuvre sans la présence d'un catalyseur, et
dans la première étape de procédé, 2,5 à 4 moles d'oxyde d'alkylène par mole d'amine aromatique étant utilisées, et
dans la première étape de procédé, 1,5 à 2 moles d'oxyde d'éthylène et 1 à 2 moles d'oxyde de propylène par mole d'amine aromatique étant utilisées,
**caractérisé en ce que** la teneur totale en oxyde d'éthylène dans le polyétheralcool est de 4 à 20 % en poids, par rapport au poids du polyétheralcool.

8. Polyétheralcools qui peuvent être préparés selon la revendication 7.
